# EUROPÄISCHE PATENTSCHRIFT

(11) **EP 0 462 322 B1**
(45) Veröffentlichungstag und Bekanntmachung des Hinweises auf die Patenterteilung: **27.07.1994**
(21) Anmeldenummer: 90125829.3
(22) Anmeldetag: 31.12.1990
(51) Int. Cl.: B23Q 1/24

(54) **Führung zum spitzenlosen, radialen Führen von axial bewegten Stäben**
Guide for radial and centerless guidance of axially moving bars
Guide pour le guidage radial et sans centre de barres se déplaçant axialement

(30) Priorität: 16.06.1990 DE 4019283
(43) Veröffentlichungstag der Anmeldung: 27.12.1991
(73) Patentinhaber: Th. Kieserling & Albrecht GmbH & Co., 42651 Solingen (DE)
(72) Erfinder: Glomb, Reiner, Dipl.-Ing., W-5620 Velbert (DE); Maresch, Peter, Dipl.-Ing., W-5650 Solingen (DE); Wagner, Ralf, Dipl.-Ing., W-5650 Solingen 1 (DE)
(74) Vertreter: Stachow, Ernst-Walther, Prof. Dr.

(56) Entgegenhaltungen:
- EP-A- 0 348 719
- GB-A- 1 452 606
- US-A- 3 347 603
- US-A- 4 530 507

## Beschreibung

Die Erfindung bezieht sich auf eine Schälmaschine mit einer Führung zum spitzenlosen, radialen Führen von axial bewegten Stäben.

Derartige Führungen werden insbesondere bei der spitzenlosen Dreh- und Schleifbearbeitung von Rundmaterialien eingesetzt. Im engeren Sinne sind solche Maschinen betroffen, bei denen der Stab nicht nennenswert um seine Längsachse rotiert und die mit umlaufenden Werkzeugen arbeiten. Mit der Ausnahme von sehr kurzen Stäben oder Rohren macht die spitzenlose Dreh- oder Schleifbearbeitung das Verfahren und die Maschine unabhänigig von der Länge der zu bearbeitenden Werkstücke. Mindestens auf einer Seite der Bearbeitungsstelle wird das Werkstück radial in einer vorbestimmten Position geführt. In der Mehrzahl der Fälle kommt ein rotierender Bearbeitungskopf mit einer zentralen Bohrung, in die Bearbeitungswerkzeuge hineinragen, zur Anwendung. Dabei wird von der Oberfläche des Werkstücks, das durch die Drehmitte des Bearbeitungskopfes geführt wird, eine Materialschicht abgetragen. Das Werkstück wird dann von der Führung zentrisch zur Drehachse des Kopfes positioniert und kann axial vorgeschoben werden.

Die Konzentrizität der Drehachse des Bearbeitungskopfes und der benachbarten Führung läßt sich nicht 100%ig genau einrichten. Das hat seine Ursachen in der praktisch erzielbaren Genauigkeit bei der Justierung und in unterschiedlichen Abnutzungsgraden an den Werkzeugen des Bearbeitungskopfes oder der Führung.

Hauptsächlich bei der spanenden Bearbeitung werden durch den in der Regel mit hoher Geschwindigkeit durchgeführten Zerspanungsprozess Schwingungen frei, die von der Führung des Werkstücks in der Nähe des Bearbeitungskopfes gedämpft oder aufgefangen werden sollen.

Den axialen Vorschub übernehmen meistens andere Aggregate.

Aus der DE-A1 32 40 146 ist eine gattungsbildende Einrichtung zum achskonstanten Führen von Profilstäben bekannt, in der mit 3 Führungselementen ein runder Stab radial geführt wird. Die einzelnen Führungselemente in einer Querebene zur Längsachse des Profilstabes bzw. zur Drehachse des Messerkopfes sind nachgiebig am Gehäuse abgestützt und durch eine Zentralverstellung synchron radial zum gewünschten Zentrum beweglich. Diese Querebene ist die Führungsebene. Die Schwingungsanfachung und die Zentrierwirkung bei dieser Führung sind in einigen Fällen nicht ausreichend.

Aus der DE-AS 1104289 ist eine Einrichtung zum Führen bei Schälmaschinen bekannt, die einen runden Stab mit 2 Paaren von einander gegenüber liegenden Führungselementen in der Führungsebene zentriert. Jedes Paar von Führungselementen stützt sich an Abschnitten einer Spirale ab, die in einem zum zu führenden Stab konzentrisch gelagerten Ring ausgebildet sind. Bei Schwenkung des Rings werden die Rollen eines Paares synchron radial bewegt. Die Paare sind um 90° gegeneinander verschwenkt, so daß die vier Führungselemente sternförmig um den Querschnitt des zu führenden Stabes angeordnet sind. Jedes Rollenpaar ist gemeinsam abgefedert. Nachteilig bei dieser Führungseinrichtung ist, daß eine Dreipunkt - Unrundheit nicht optimal geführt werden kann und daß Schwingungen um die Längsachse des Stabes nicht ausreichend unterdrückt werden.

Der Erfindung liegt die Aufgabe zugrunde, die Dämpfung von Schwingungen in Führungen der gattungsbildenden Art zu verbessern. Weiterhin soll das Entstehen von Schwingungen behindert und die Zentrierung eines großen Bereiches von Durchmessern mit unterschiedlichen Unrundheiten ermöglicht werden.

Diese Aufgabe wird durch die Merkmale von Patentanspruch 1 bzw. 2 gelöst. Die erfindungsgemäße Führungseinrichtung gemäß Anspruch 1 stützt den Stab radial in fünf Richtungen ab, sie verhindert damit in hohem Maße die Schwingungsanfachung, erlaubt es Stäbe mit beliebiger Unrundheit ausreichend präzise zu zentrieren und ist von seiner baulichen Konzeption her in der Lage auch dünne Stäbe noch zu führen.

Alternativ ist eine Führung gemäß Anspruch 2 vorgesehen, die die Schwingungsanfachungen besser beherrscht, jedoch einen größeren kleinsten Durchmesser zur Führung benötigt, da sieben Führungselemente mehr Platz am Umfang des zu führenden Stabes benötigen als fünf.

Bevorzugt kommen derartige Führungen in einer Schälmaschine einlaufseitig vor dem Messerkopf zur Anwendung.

Die Erfindung wird im einzelnen anhand der in der Zeichnung wiedergegebenen Anwendung auf eine Schälmaschine erläutert. Dabei zeigen :
- Fig. 1 :: Die schematische Dartellung einer Schälmaschine in Seitenansicht, teilweise im Schnitt;
- Fig. 2 :: eine Stirnseitenansicht einer Führung auf der Einlaufseite einer Schälmaschine in verändertem Maßstab;
- Fig. 3 :: einen Querschnitt nach Linie III - III in Fig.1 in vergrößertem Maßstab;

- Fig. 4 :: ein Führungselement aus Fig. 2 im Schnitt;

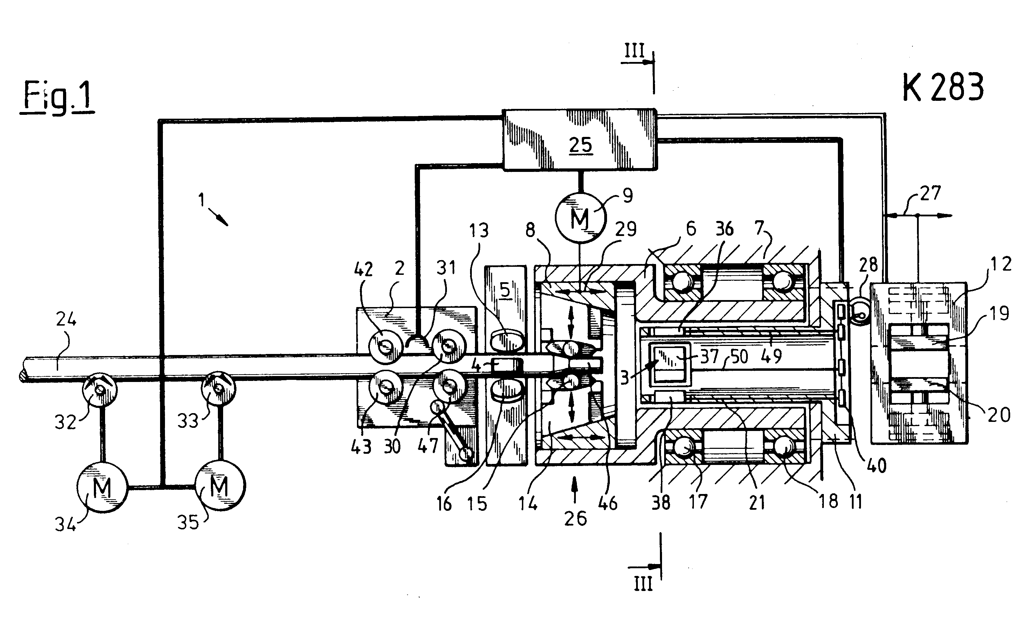

Fig.1 zeigt eine Stange 24, die in einer Schälmaschine 1 geschält wird. Die Schälmaschine besteht aus einem Einschubaggregat 2, einer vorderen Führung 5 einem Messerkopf 26, einer hinteren Führung 3 und einem auslaufseitigen Spannwagen 12. Der Messerkopf ist einlaufseitig an einer Hohlwelle 6 angeordnet, die in Lagern 17, 18 im Maschinengehäuse 7 drehbar gehalten ist. Messerkopf und Hohlwelle laufen beim Betrieb der Hohlwelle um. Der Messerkopf trägt mehrere Schälmesser 15, die auf wendelförmiger Bahn eine Umfangsschicht von der Stange 24 abschälen. Fig.1 zeigt den Beginndes Schälvorgangs.

Bei der Schälbearbeitung wird der Stab von der vorderen Führung 5 und der hinteren Führung 3 relativ zur Drehachse von Messerkopf 6 und Hohlwelle 26 zentriert und die vom Schnitt ausgehenden Schwingungen werden gedämpft.

Der Einschubapparat 2 mit den Rollen 42, 43; 30, 47 transportiert den Stab durch die Schälmaschine und übernimmt das Schnittmoment. Der Stab bewegt sich im wesentlichen ohne Eigendrehung durch die Schälmaschine. Die Stange 24 wird in nicht dargestellter Weise vereinzelt und auf die Zuführrollen 32, 33 gelegt, die von Motoren 34, 35 angetrieben werden und den Stab dem Einschubapparat 2 zuführen. Die Steuerung der gesamten Maschine wird von einer Steuereinrichtung 25 besorgt, die an die Motoren 34, 35 der Zuführrollen, an den Einschubapparat 2, an einen Verstellmotor 9 für die Messerhalter 14, an die hintere Führung 3 und an den Spannwagen 12 angeschlossen ist. Der Einschubapparat 2, die vordere Führung 5, der Messerkopf 26 und die hintere Führung 3, sowie die Spannbacken 19, 20 werden auf den Eingangsdurchmesser bzw. auf den geschälten Durchmesser der Stange 24 eingestellt. Die vordere Führung 5 zentriert die Stange 24 zur Drehachse der Hohlwelle unmittelbar einlaufseitig des Messerkopfes 5 in einer Querebene zur Stange 24 mit fünf Rollen 13, 4, 16, 44 und 45, die in der Führungsebene sternförmig um den Stab 24 herum angeordnet sind.

Die Verstellung der Messer 15 in radialer Richtung erfolgt durch den Stellmotor 9, der eine Konushülse 8, an der sich die Messerhalter radial abstützen, in axialer Richtung (Pfeil 29) bewegt und damit den Durchtrittsquerschnitt des Messerkopfes verändert.

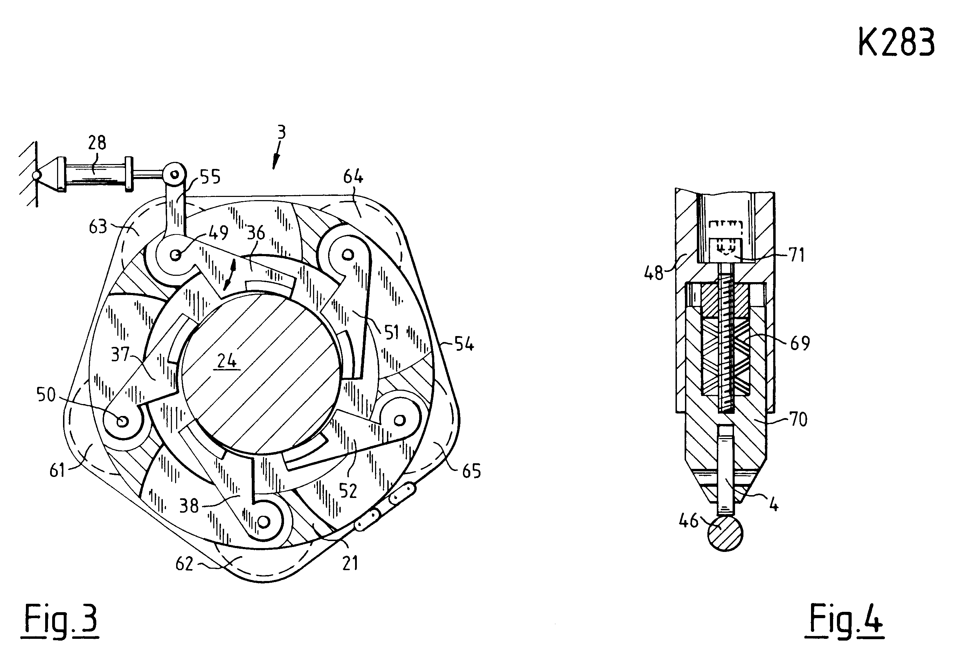

Die hintere Führung 3 (s.a. Fig.3) besteht aus einem in die Hohlwelle hineinkragenden Rohrstutzen, der mit seinem Flansch 11 am Maschinengestell 7 befestigt ist. Der Rohrstutzen 21 ragt tief in die Hohlwelle 6 bis in die Nähe des Messerkopfes 26 hinein. An dem einlaufseiten Ende des Rohrstutzens 21 unmittelbar auslaufseitig des Messerkopfes 26 sind fünf Führungselemente 36, 37, 38, 51, 52 vorgesehen, die in direktem Kontakt mit der (in Fig.3) eingeführten Stange 24 für deren Zentrierung sorgen.

Der Spannwagen 12 ist in Richtung des Pfeiles 27 verfahrbar. Seine Spannbacken 19, 20 besorgen gegen Ende der Schälbearbeitung der Stange 24, kurz bevor diese die Einzugsrollen 42, 43; 30, 47, verläßt, sowohl die Sicherung der Stange 24 gegen Verdrehung durch das Schnittmoment als auch den Vorschub für die Stange 24 bis zu deren Verlassen der Schälmaschine.

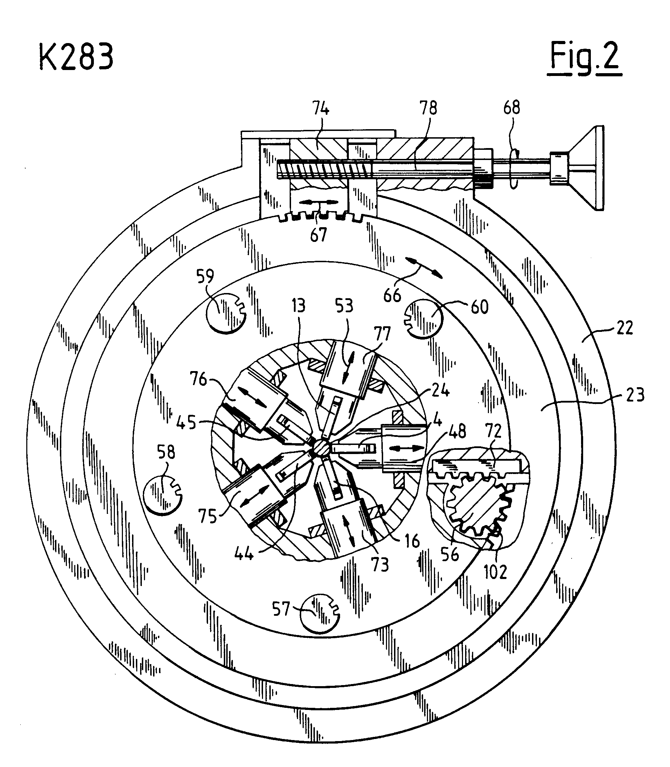

Die in Fig. 2 gezeigte vordere Führung zentriert den Stab 24 mit fünf sternförmig um diesen herum angeordneten Führungsrollen 13, 4, 16, 44 und 45 einlaufseitig des Messerkopfes 26. Die vordere Führung umfaßt eine Gehäuse 22, in dem ein koaxialer Stellring 23 drehbar gelagert ist, einen Gleitstein 74, der mit dem Stellring über eine Verzahnung in Eingriff steht und in Richtung des Pfeiles 67 beweglich ist, fünf Zahnritzel 56, 57, 58, 59 und 60 und fünf Rollenhalter 48, 73, 75, 76, 77. Der Gleitstein 74 ist durch Drehung einer Spindel 78 in Richtung des Pfeiles 67 feinfühlig verstellbar und verdreht dabei den Stellring 23 im Gehäuse 22. Jedes der fünf Ritzel 56 ... 60 steht mit einer Verzahnung 102 mit dem Stellring in Eingriff. Weiterhin steht jedes der fünf Ritzel 56 ... 60 mit dem Rollenhalter in Eingriff. Durch diese kinematische Verbindung werden bei Drehung der Spindel 78 alle Rollenhalter 48, 73, 75, 76, 77 mit den darin gelagerten Rollen 4, 16, 44, 45, 13 synchron, gleichmäßig und mit unveränderter Lage des Durchtrittsquerschnittes für den Stab 24 durch die vordere Führung verstellt. Die Verwendung von 5 Führungselementen, bzw. Rollen 4, 16, 44, 45, 13 erlaubt eine optimale Kombination von Dämpfung der Schwingungsanfachung, Zentrierung von kleineren Unrundheiten beliebiger Qualität und die Abdeckung eines großen Durchmesserbereiches.

Um sicherzustellen, daß die Rollen 4, 16, 44, 45, 13 ständig in Anlage am Stab 46 bleiben und eine optimale Dämpfung des Stabes erfolgt, sind die Rollenhalter einzeln abgefedert, wie in Fig.4 dargestellt. Im Rollenhalter 48 selbst ist ein Schlitten 70 geführt, der von einer Schraube 71 im Zusammenwirken mit einem Tellerfederpaket 69 vorgespannt und abgefedert ist. Sobald der Stab mit einer Kraft, die größer ist als die der Vorspannung, auf die Rolle drückt, weicht diese aus, ohne daß sich die Position des Rollenhalters 48 ändert.

Die in Fig.3 gezeigte Schnittdarstellung einer hinteren Führung 3 der Schälmaschine bildet den Endabschnitt an einem Rohrstück 21, das von der Auslaufseite in die Hohlwelle 6 bis an den Messerkopf 26 heranragt. Die hintere Führung umfaßt fünf Klappen 36, 37, 38, 51 und 52, die sternförmig um die Stange 24 angeordnet sind, die um sich in axialer Richtung durch das Rohrstück erstreckende Achsen 49, 50 schwenkbar sind und deren Bewegung synchronisert ist und von dem Zylinder 28 gesteuert wird. Die Synchronisation erfolgt über die Achsen 49, 50 der Klappen 36, 37, 38, 51, 52 an deren auslaufseitigem Ende Zahnsegmente 61 bis 65 befestigt sind, die von einer gemeinsamen Kette 54 umspannt werden. An der Klappe 36 ist ein Arm 55 befestigt, der an der Kolbenstange des Zylinders 28 angelenkt ist. Bei einer Betätigung des Zylinders 28 wird die Klappe 36 unmittelbar und die übrigen Klappen mittelbar über die Kette 54 betätigt. Dadurch werden alle Klappen 36, 37, 38, 51, 52 synchron um gleiche Wege bewegt, so daß sich ein Durchtrittsquerschnitt mit unveränderlichem Mittelpunkt für die zu führende Stange ergibt.

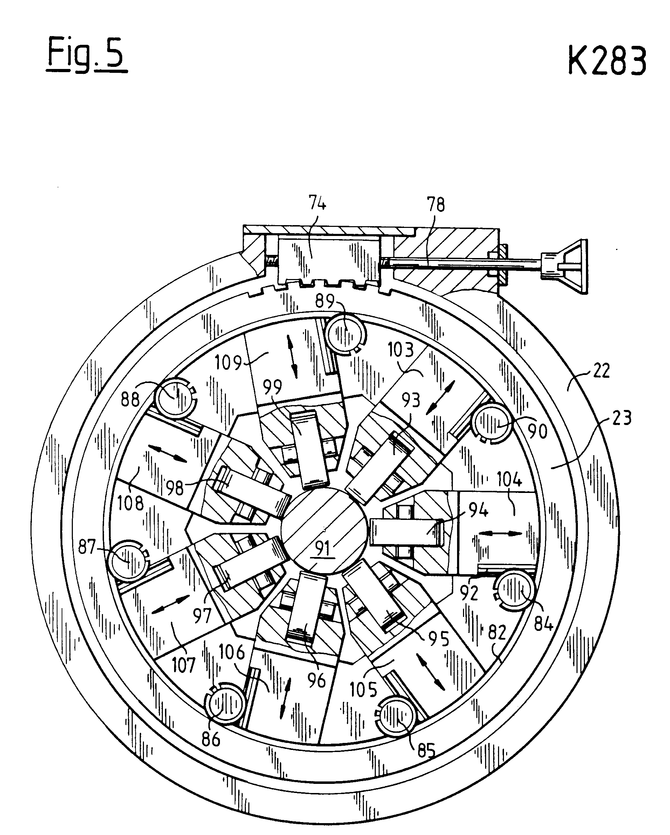

Die in Fig. 5 gezeigte vordere Führung 80 entspricht in ihrem grundsätzlichen Aufbau und in ihrer Anwendung und Anordnung in der Schälmaschine der in Fig.2 gezeigten vorderen Führung. Sie besteht aus einem Gehäuse 22, einem darin drehbar gelagerten Stellring 23, sieben in dem Gehäuse sternförmig angeordneten und in radialer Richtung in dem Gehäuse geführten Führungselementen 103, 104, 105, 106, 107, 108 und 109 mit Rollen 93, 94, 95, 96, 97, 98 und 99. Die Führungselemente 103-109 zentrieren die Stange 91 auf ein einmal eingestelltes Zentrum, das mit der Drehachse der Hohlwelle 6 (Fig.1) zusammenfällt. Jedes Führungselement 103-109 trägt seitlich eine Zahnstange 92, die mit einem der im Gehäuse 22 gelagerten Zahnritzel 84, 85, 86, 87, 88, 89 und 90 durch eine Verzahnung im Eingriff stehen. Zusätzlich stehen die Ritzel 84-90 mit einer Innenverzahnung 82 am Stellring 23 in Eingriff. Eine Drehung des Stellrings bewegt alle Führungselemente 103-109 gleichzeitig um ein gleiches Maß in radialer Richtung auf die Stange 91 zu oder von ihr weg. Das Verschwenken des Stellrings 23 erfolgt über eine Gewindespindel 78 mit Handrad und einen im Gehäuse 22 geführten Gleitstein 74.

Durch die Führung mit 7 Führungselementen wird eine sehr gute Zentrierung auch nicht exakt runder Stangen 91 erreicht und die Schwingungsanfachung durch die Führung wird auf ein Minimum reduziert.

## Patentansprüche

1. Schälmaschine mit einer Führung (3, 5) zum spitzenlosen, zentrischen, radialen Führen von axial bewegten Stäben (46), die die folgenden Merkmale aufweist:
a) eine Mehrzahl von Führungselementen (Rollen 13, 4, 16,44, 45), die, am Stab (46) anliegend diesen in der Führungsebene in Richtung des Zentrums der Führung drücken,
b) ein Gehäuse (22), in dem die Führungselemente (Rollen 13, 4, 16,44, 45) beweglich abgestützt sind,
c) eine zumindest teilweise nachgiebige (Federn 69) Abstützung der Führungselemente (Rollen13, 4, 16,44, 45) gegen das Gehäuse (22),
gekennzeichnet durch das folgende Merkmal:
d) es sind nur fünf Führungselemente (Rollen 13, 4, 16,44, 45) in der Führungsebene vorgesehen.

2. Schälmaschine mit einer Führung (3, 5) zum spitzenlosen, zentrischen, radialen Führen von axial bewegten Stäben (46), die die folgenden Merkmale aufweist:
a) eine Mehrzahl von Führungselementen (Rollen 13, 4, 16,44, 45), die, am Stab (46) anliegend diesen in Richtung des Zentrums der Führung drücken,
b) ein Gehäuse (22), in dem die Führungselemente (Rollen 13, 4, 16,44, 45) beweglich abgestützt sind,
c) eine zumindest teilweise nachgiebige (Federn 69) Abstützung der Führungselemente (Rollen13, 4, 16,44, 45) gegen das Gehäuse (22),
gekennzeichnet durch das folgende Merkmal:
d) es sind nur sieben Führungselemente (Rollen 93, 94, 95, 96, 97, 98 und 99) vorgesehen.

3. Schälmaschine nach Anspruch 1 oder 2, gekennzeichnet durch das folgende Merkmal:
die Führung (3,5) ist einlaufseitig des Messerkopfes (26) angeordnet.

## Claims

1. Peeling machine with a guide (3, 5) for radial and centerless, centric guidance of axially moving bars (46), displaying the following features:
a) a number of guide elements (rollers 13, 4, 16, 44, 45) which, being in contact with the bar (46), push it in the direction of the centre of the guide in the guidance plane,
b) a housing (22) in which the guide elements (rollers 13, 4, 16, 44, 45) are supported in movable fashion,
c) a supporting device which is at least partially resilient (springs 69), for bracing the guide elements (rollers 13, 4, 16, 44, 45) against the housing (22),
characterised by the following feature:
d) only five guide elements (rollers 13, 4, 16, 44, 45) are provided in the guidance plane.

2. Peeling machine with a guide (3, 5) for radial and centerless, centric guidance of axially moving bars (46), displaying the following features:
a) a number of guide elements (rollers 13, 4, 16, 44, 45) which, being in contact with the bar (46), push it in the direction of the centre of the guide in the guidance plane,
b) a housing (22) in which the guide elements (rollers 13, 4, 16, 44, 45) are supported in movable fashion,
c) a supporting device which is at least partially resilient (springs 69), for bracing the guide elements (rollers 13, 4, 16, 44, 45) against the housing (22),
characterised by the following feature:
d) only seven guide elements (rollers 93, 94, 95, 96, 97, 98, 99) are provided.

3. Peeling machine as per Claim 1 or 2, characterised by the following feature:
The guide (3, 5) is located on the inlet side of the cutter head (26).

## Revendications

1. Machine à écroûter avec un guide (3, 5) pour le guidage radial et sans centre de barres (46) se déplaçant axialement présentant les caractéristiques suivantes:
a) une multiplicité d'éléments de guidage (rouleaux 13, 4, 16, 44, 45) qui, affleurant la barre (46), poussent celle-ci dans le plan de guidage en direction du centre du guide,
b) un boîtier (22) dans lequel les éléments de guidage (rouleaux 13, 4, 16, 44, 45) s'appuient de façon mobile,
c) un appui au moins partiellement élastique (ressorts 69) des éléments de guidage (rouleaux 13, 4, 16, 44, 45) contre le boîtier (22),
caractérisée par la caractéristique suivante:
d) il y a seulement cinq éléments de guidage (rouleaux 13, 4, 16, 44, 45) de prévu dans le plan de guidage.

2. Machine à écroûter avec un guide (3, 5) pour le guidage radial et sans centre de barres (46) se déplaçant axialement présentant les caractéristiques suivantes:
a) une multiplicité d'éléments de guidage (rouleaux 13, 4, 16, 44, 45) qui, affleurant la barre (46), poussent celle-ci dans le plan de guidage en direction du centre du guide,
b) un boîtier (22) dans lequel les éléments de guidage (rouleaux 13, 4, 16, 44, 45) s'appuient de façon mobile,
c) un appui au moins partiellement élastique (ressorts 69) des éléments de guidage (rouleaux 13, 4, 16, 44, 45) contre le boîtier (22),
caractérisée par la caractéristique suivante:
d) il y a seulement sept éléments de guidage (rouleaux 93, 94, 95, 96, 97, 98 et 99) de prévu dans le plan de guidage.

3. Machine à écroûter suivant revendication 1 ou 2, caractérisée par la caractéristique suivante:
le guide (3, 5) est disposé du côté entrée de la tête porte-lames (26).
